# EUROPEAN PATENT APPLICATION

(11) **EP 1 655 821 A2**
(43) Date of publication of application: **10.05.2006**
(21) Application number: 05018785.5
(22) Date of filing: 30.08.2005
(51) Int. Cl.: H02K 9/14, H02J 9/06, H05K 7/14, H05K 7/20, F02C 6/16

(54) **Systems and methods for providing cooling in compressed air storage power supply systems**

(30) Priority: 17.09.2004 US 943291
(71) Applicant: Active Power, Inc., Austin; TX 78758 (US)
(72) Inventor: Perkins, David E., Austin Texas 78731 (US); Andrews, James A., Austin Texas 78704 (US); Radke, Robert E., Dripping Springs Texas 78620 (US); Pinkerton, III Joseph F., Austin Texas 78703 (US); Logan, Scott D., Cedar Park Texas 78612 (US)
(74) Representative: Vossius & Partner

(57) **Abstract**

A system and method for cooling electrical machines (e.g., generators), sub-systems (e.g., power electronics), and components (e.g., bearings) in an electrical generation system such as a compressed air storage (CAS) energy system or a thermal and compressed air storage (TACAS) energy system is provided. Cooling is derived from the thermal expansion of a compressed gas, which may be the same gas used to drive a turbine-generator of CAS or TACAS energy system.

## Description

This invention relates to systems and methods for removing heat from a system. More particularly, this invention provides heat exchanging techniques to remove heat from various components and/or subsystems of electrical generation systems such as thermal and compressed air storage (TACAS) backup energy systems or compressed air storage (CAS) backup energy systems. Electrical generation systems may include components and/or subsystems such as electrical machines and power electronics that may require cooling.

Electrical machines such as generators and motors are well known in the art. Such machines are used in thousands of different applications, some of which include the generation of electric power. Electric power is generated, for example, when the rotor of a generator is driven by a prime mover (e.g., turbine) to produce a rotating magnetic field within the machine. The rotating magnetic field induces voltage within the stator windings of the generator that is output as electrical energy.

During operation, heat may be generated by the stator core, stator windings, bearings, rotor, and/or other sources during generator operation. Such heat may be detrimental to generator performance and operation. For example, excess heat can decrease the flux capacity of permanent magnets in the generator and damage generator components such as bearings and generator windings.

Conventional methods for cooling the stator to remove heat include auxiliary cooling fans, circulating water systems, and/or circulating oil systems. Other systems may use compressors to route bleed air over the stator to cool the generator. Though such cooling systems are able to cool generators, they require substantial maintenance and a supply of power to operate. Moreover, such cooling systems are typically unable to maintain an operating temperature of the generator below a desired temperature (e.g., an ambient air temperature).

Generators are often coupled to a turbine by a shaft to form a power generation system known as a turbine-generator. Turbine-generators are highly customizable for a given application such as a micro-turbine system available from Capstone Turbine Corporation of Chatsworth, California. This micro-turbine system operates at high shaft speeds, drives a permanent magnet alternator (e.g., a generator rotor), and requires cooling to remove heat from the stator during operation.

During operation, such micro-turbine systems derive stator cooling from shaft-mounted compressor inlet air, compressor bleed air, auxiliary cooling fans, or circulating oil. The turbine is powered by a fuel source (e.g., gas, coal, nuclear) that heats the air being supplied to drive the turbine. Thus, as long as fuel is supplied, the turbine-generator can provide power. Accordingly, such micro-turbines and other fuel-powered turbine-generators can run continuously for thousands or tens of thousands of hours. However, such turbine-generators are subject to several drawbacks, at least one being pollution. Combustion of fuel (or in nuclear applications fission of a fuel) is necessary to drive the turbine. Another drawback is that costly or maintenance intensive bearings (e.g., air bearings, oil film journal bearings, or magnetic bearings) are needed to sustain the long operational lives of these turbine-generators.

Power electronics are often used in electrical generation systems to perform various tasks including, but not limited to, driving electrical machines, conditioning power derived from an electrical machine, and selectively providing power to subsystems (e.g., a flywheel energy backup system or a thermal storage unit). Heat may be generated while power electronics are performing these tasks. Conventional techniques for removing heat from power electronics include using a finned heat sink and a fan. The heat sink transfers heat from the power electronics to the ambient environment (e.g., the air surrounding the heat sink). The fan may be used to force air over the fins to improve the rejection of heat to the ambient environment. Water cooling may be used in power electronics that operate at a higher power density.

These power electronic cooling techniques suffer from many of the same drawbacks experienced in cooling electrical machines. That is, substantial maintenance and a supply of power to operate the cooling mechanism may be required. In addition, such cooling systems are typically unable to maintain an operating temperature of the power electronics below a desired temperature (e.g., an ambient air temperature) . Furthermore, the power density is usually limited to a finite power density because conventional cooling systems lack the requisite cooling capacity to prevent the power electronics from overheating if such finite power density is exceeded.

In view of the foregoing, it is an object of this invention to provide improved cooling of components and/or subsystems of an electrical generation system.

It is also an object of the present invention to provide improved cooling of an electrical machine and power electronics used in an electrical generation system.

It is an additional object of the present invention to provide improved cooling that reduces maintenance requirements.

It is still a further object of the present invention to promote electrical machine design flexibility and to reduce electrical machine manufacturing cost.

These and other objects of the invention are accomplished using the expansion of stored compressed gas, which is the same compressed gas used to drive a turbine-generator, to cool components and/or subsystems (e.g., electrical machine, power electronics, etc.) of an electrical generation system (e.g., a TACAS or CAS backup energy system). As gas expands, it cools. Thus, in accordance with this invention, compressed gas is expanded across a valve, the expansion of which cools the gas to, for example, sub-ambient temperatures, and is then routed to one or more components and/or subsystems of the electrical generation system.

One of the components and/or subsystems cooled by the cool gas is an electrical machine, sometimes referred to herein as an electrical generator or generator. The cool gas may be routed through a stator housing and removes heat from the electrical generator, thereby yielding a desired electrical generator operating temperature. The heat being removed by the cold gas may be generated by electrical resistance losses in the stator windings, hysteresis and/or eddy current losses in the laminated stator core, stray load losses on the rotor due to laminated stator core slot harmonics, and/or armature winding current harmonics, rotor windage losses, and friction losses in the bearings located within the electrical machine. In addition, the cold gas may remove heat transferred to the electrical machine by conduction from a turbine, which drives the rotor of the electrical generator.

The cool gas can be routed to other components and/or subsystems of the electrical generation system in addition to, or to the exclusion of, the electrical generator. For example, cool gas may be routed directly to bearings (e.g., thrust-end and non-thrust end bearings) housed in the electrical machine. As another example, cool gas may be routed directly to a bearing housed (e.g., a thrust-end bearing) in the turbine. Cooling such bearings, regardless of whether they are located in the electrical machine or turbine, extends their operational life. As a further example, cool gas may be routed to a power electronics housing to cool power electronics being utilized in connection with the electrical generation system.

The cooling means according to the present invention may be implemented in a CAS backup energy system or a TACAS backup energy system. Such systems may provide emergency backup power in the event of a disturbance in utility power. For example, if utility power fails, compressed gas is drawn from an air reservoir (e.g., pressure tank) and supplied to a turbine. The compressed gas drives the turbine, which in turn powers the electrical generator. Thus, the compressed gas being used to ultimately generate electrical power is also used to cool the components and/or subsystems of the backup energy system.

The cooling means according to the present invention may also be implemented in other systems that use compressed gas. For example, continuously operating TACAS or CAS systems (e.g., systems that do not provide backup power), may be used to provide a continuous supply of power. Such systems may use a compressor to provide continuous compressed gas for use in cooling components and/or subsystems and for driving a turbine-generator.

In TACAS systems, a portion of the cool gas may be heated to a predetermined temperature before being routed to the turbine. The cool gas may be heated by a heating system, such as a thermal storage unit, to increase the operating efficiency of the turbine. If desired, the portion of the cool gas being heated by the heating system may be routed through certain components and/or subsystems (e.g., stator housing and/or power electronics housing) before being supplied to the heating system. Such an arrangement may improve the heating discharge efficiency of the heating system because heat loss picked up by the cool gas passing through the components and/or subsystems is recovered and delivered to the heating system. Thus, a regenerative heating mechanism is built into the operation of the TACAS system which enhances its operating efficiency.

An advantage of the present invention is that the temperature of the gas being routed to the components and/or subsystems may be substantially lower than the heat-exchanging mediums (e.g., ambient air, oil, water, etc.) used by conventional heat exchangers. As a result, this correlates to a lower operating temperature not previously achieved in prior art cooling systems. A lower operating temperature promotes reduced generator sizing (e.g., smaller stator core and stator windings and smaller rotors) and increased generator design flexibility, and thus less cost. Moreover, reduced sizing further decreases spool-up time required for the turbine-generator to start producing emergency power. Another advantage of the present invention is that independent cooling systems, such as fans, compressors, oil circulating systems, are not needed to provide cooling. This correlates to less cost, elimination of a need to power such systems, elimination of maintenance, increased reliability, and a more compact system.

Another aspect of the present invention includes a power electronics housing which routes cool gas in direct contact with, or proximal to, the power electronics of the electrical generation system. The power electronics housing may include a thermally conductive body to which the power electronics are mounted and heat sinks. Cool gas derived in accordance with the principles of the invention may be routed through the thermally conductive body to extract heat generated by the power electronics during an active mode of operation of the electrical generation system. The heat sinks may extract heat from the power electronics during both standby and active modes of operation of the electrical generation system.

An advantage of cooling the power electronics with the expanded gas is that it increases the cooling capacity beyond that previously achieved with conventional cooling techniques, thereby permitting the power density of the power electronics to be increased to levels not previously sustainable by conventional cooling techniques.

Another aspect of the present invention includes stator housings which route cool gas in direct contact with, or proximal to, the wound stator core of an electrical generator. The stator housing may be machined to fit flush (e.g., air tight) against the stator core to maximize heat exchanging efficiency. Such stator housings may have one or more annular channels for routing cool gas around the stator. Stator housings may include a pressure sleeve to prevent gas from damaging the laminated stator core and/or windings or appurtenances thereof during power generation.

The above and other features of the present invention, its nature and various advantages will become more apparent upon consideration of the following detailed description, taken in conjunction with the accompanying drawings, in which like reference characters refer to like parts throughout, and in which:

FIG. 1 is a schematic diagram of a known thermal and compressed air storage backup energy system;

FIG. 2 is a block diagram that generally illustrates how a cooling fluid is derived in accordance with the principles of the present invention;

FIG. 3 is a schematic diagram of a thermal and compressed air storage backup energy system showing a valve and gas routing configuration for cooling a generator in accordance with the principles of the present invention;

FIG. 4 is a schematic diagram of a thermal and compressed air storage backup energy system showing a valve and gas routing configuration for cooling bearings housed in a generator in accordance with the principles of the present invention;

FIG. 5 is a schematic diagram of a thermal and compressed air storage backup energy system showing a valve and gas routing configuration for cooling a bearing housed in a turbine in accordance with the principles of the present invention;

FIG. 6 is a schematic diagram of a thermal and compressed air storage backup energy system showing a valve and gas routing configuration for cooling power electronics in accordance with the principles of the present invention;

FIG. 7 is a three-dimensional exploded perspective view of a power electronics housing in accordance with the principles of the present invention;

FIG. 8 is cross-sectional view of a turbine-generator having a stator housing in accordance with the principles of the present invention;

FIG. 9A is a three-dimensional perspective view of a stator jacket of the stator housing of FIG. 8 in accordance with the principles of the present invention;

FIG. 9B is a three-dimensional perspective view of a jacket housing of the stator housing of FIG. 8 in accordance with the principles of the present invention

FIG. 10A is a three-dimensional perspective view of an alternative stator housing in accordance with the principles of the present invention;

FIG. 10B is a cross-sectional view the stator housing taken along lines B-B of FIG. 10A in accordance with the principles of the present invention;

FIG. 10C is a cross-sectional view of the stator housing taken along lines C-C of FIG. 10A in accordance with the principles of the present invention;

FIG. 11 is a cross-sectional view a generator assembly having the stator housing of FIG. 10A in accordance with the principles of the present invention;

FIG. 12A is cross-sectional view of an alternative stator housing in accordance with the principles of the present invention;

FIG. 12B is three-dimensional, partial cutaway, perspective view of the stator housing of FIG. 12A in accordance with the principles of the present invention;

FIG. 13 is three-dimensional, partial cutaway, perspective view of another alternative stator housing in accordance with the principles of the present invention;

FIG. 14A is cross-sectional view of yet another alternative stator housing in accordance with the principles of the present invention; and

FIG. 14B is three-dimensional, partial cutaway, perspective view of the stator housing of FIG. 14A in accordance with the principles of the present invention.

Cooling according to the principles of the present invention can be implemented in many different types of electrical generation systems, particularly systems that derive electrical power from stored compressed gas. Such systems include, but are not limited to, CAS systems and TACAS systems. To further facilitate understanding of the present invention, a brief discussion of such a system is provided to set forth a possible framework in which the invention may be practiced.

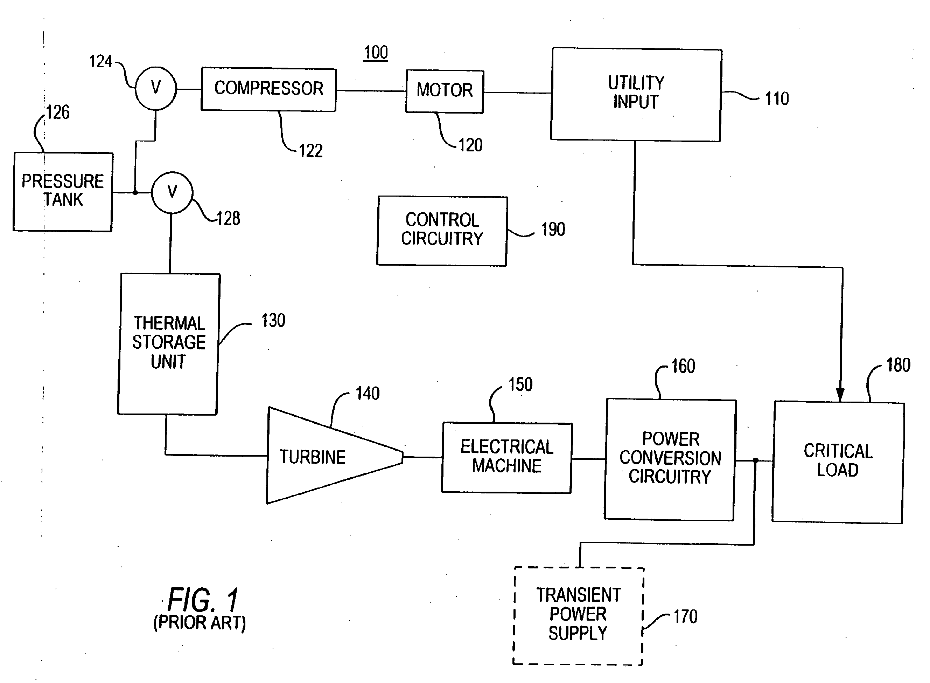

FIG. 1 shows a schematic of a known TACAS backup energy system 100. Backup energy system 100 may be connected to utility input 110 which supplies power to a critical load 180 during normal operating conditions. Persons skilled in the art will appreciate that utility input 110 may be any type of primary power source, AC or DC.

Backup energy system 100 includes motor 120, compressor 122, one way valve 124, pressure tank 126, valve 128, thermal storage unit 130, turbine 140, electrical machine 150, power conversion circuitry 160, and control circuitry 190. If desired, optional transient power supply 170 (e.g., flywheel energy storage system, ultracapacitor, batteries, etc.) may also be provided. Electrical machine 150 may be a machine capable of functioning as a motor and a generator. During normal operating conditions, utility input 110 supplies power to critical load 180. Utility input 110 may also power motor 120, which drives compressor 122 to charge pressure tank 126 with compressed air. The compressed air may be pushed through one way valve 124 to prevent feedback. Persons skilled in the art will appreciate that pressure tank 126 can be substituted with a different type of air storage reservoir such as a cavern (e.g., underground salt dome).

Although control circuitry 190 is not shown to be connected to any of the components included in backup energy system 100, persons skilled in the art will appreciate that control circuitry 190 can perform control and monitoring functions well known and understood in the art. For example, control circuitry 190 can cause valve 128 to OPEN when utility power fails.

In the event of a power failure, compressed air stored in pressure tank 126 is routed through valve 128 to thermal storage unit 130. Thermal storage unit 130 heats the compressed air prior to being routed to turbine 140. Thermal storage unit 140 may be an exhaustless heater (e.g., a non-polluting heater). Examples of and discussion of the operation of such thermal storage units can be found, for example, in co-pending, commonly assigned U.S. patent application No. 10/738,825, filed December 16, 2003, U.S. patent application No. 10/943,639, filed September 17, 2004 and U.S. patent application No. 10/943,293, filed September 17, 2004 , each of which are hereby incorporated by reference in their entireties. The heated compressed air drives the turbine which in turn powers electrical machine 150. Electrical machine 150 operates as a generator and provides electrical power to power conversion circuitry 160 which conditions the power before providing it to critical load 180.

The foregoing discussion of backup energy system 100 is not intended to be a thorough discussion of TACAS systems, but is intended to provide a general framework of a system in which the present invention may be implemented. For a more detailed explanation of TACAS uninterruptible power supply systems, as briefly described above, and variations thereof, see co-pending, commonly assigned U.S. patent application No. 10/361,728, filed February 5, 2003, which is hereby incorporated by reference in its entirety. The present invention can be incorporated in other emergency backup power delivery systems such as those described in co-pending, commonly assigned U.S. patent application No. 10/361,729, now US-2004-148 922 A1, which is hereby incorporated by reference in its entirety.

The CAS and TACAS backup energy systems may be used in the context of industrial backup utility power. Alternatively, the present invention may be used in any application associated with generating power, such as in thermal and solar electric plants. The present invention may be used in continuously operating CAS and TACAS systems to generate a continuous supply of power. Furthermore, the present invention may be used in any other application using stored compressed gas in one form or another.

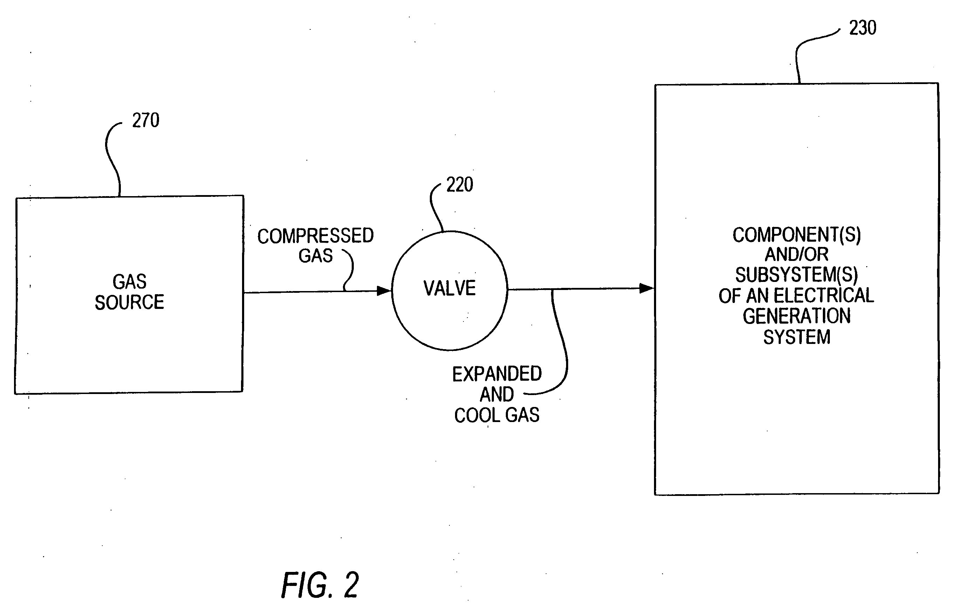

FIG. 2 is a block diagram illustrating how cool gas is derived and used to cool components and/or subsystems of an electrical generation system in accordance with the principles of the present invention. The cool gas is obtained by expanding a stored compressed gas across valve 220. The compressed gas is stored at air source 210, which may be a pressure tank, a cavern, a salt dome, or other device capable of containing a pressurized gas. Valve 220 may be a device capable of turning down the pressure of the compressed gas received from air source 210 to a predetermined pressure. For example, valve 220 may be a pressure regulator or a flow control valve.

As the compressed gas passes through valve 220, it decompresses (e.g., expands) to a lower pressure than that of the compressed gas stored in air source 210. This HIGH-to-LOW pressure drop results in a Joule-Thompson expansion of gas that results in a substantial drop in gas temperature. For example, in a controlled environment, expansion of gas from 4500.PSIA to 400 PSIA can generate gas temperatures below 30 degrees centigrade. Such cool gas temperatures are much lower than temperatures achieved using conventional fans and water or oil cooling systems.

This cool gas is then used to cool various components and/or subsystems of an electrical generation system 230. It will be appreciated that the cool gas may be used to cool components and/or subsystems 230 in a variety of different ways. For example, the cool gas may be routed to components and/or subsystems independently of each other. That is, a separate path may route cool gas to each component and/or subsystem. As another example, the cool gas may be routed to components and/or subsystems in combination with each other. That is, a single series path or multiple parallel paths may be used to route cool gas to two or more components and/or subsystems.

If desired, the cool gas may be routed to a particular component and/or subsystem and be immediately exhausted to the ambient environment. In other configurations, the cool gas may be routed to other components and/or subsystems of an electrical generation system after cooling a desired component or subsystem. For example, cool gas used to cool an electrical machine may be routed to a thermal storage unit and then to a turbine.

It will be appreciated that the present invention has a number of different applications, but to keep the discussion from becoming too abstract, and to provide better comprehension and appreciation of the invention, references will frequently be made to specific uses of the invention. It is emphasized that these examples merely represent a few of the many possible applications of the invention.

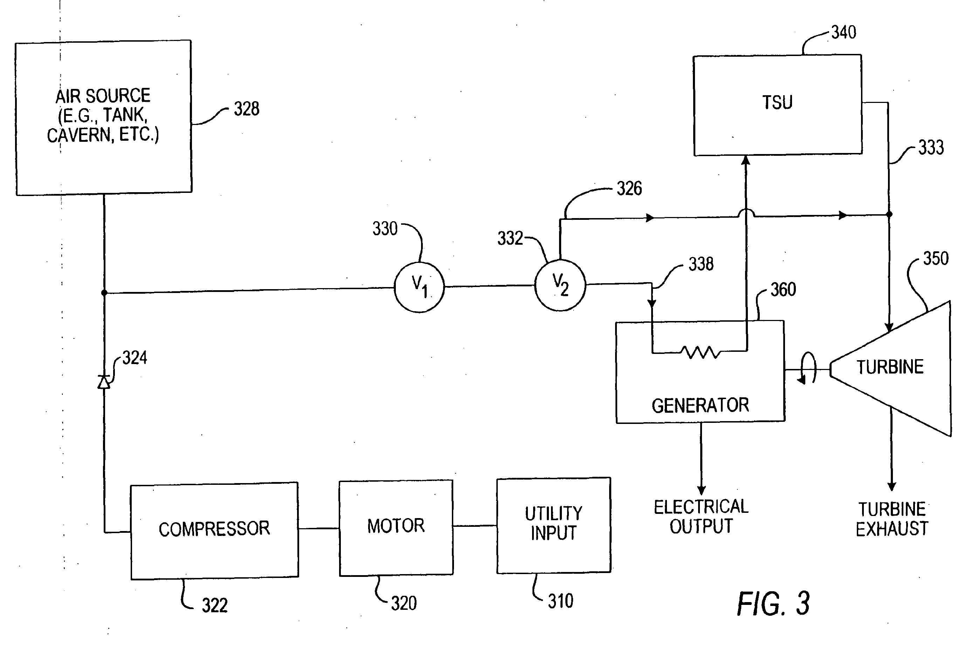

FIG. 3 is a schematic of a backup energy system 300 that cools an electrical machine in accordance with the principles of the present invention. Backup energy system 300 is similar to system 100 as described above, but is constructed to take advantage of a naturally occurring cooling process that occurs during decompression of a gas (e.g., air or argon). Backup system 300 may include utility input 310, motor 320, compressor 322, one way valve 324, air reservoir 328, valve 330, valve 332, thermal storage unit 340, turbine 350, and electrical machine 360. It is understood that system 300 can also include other components such as compressor 122 and motor 120 of FIG. 1, but have been omitted to avoid cluttering the figure. It is further understood that turbine 350 and electrical machine 360 may function together as a turbine-generator, but are shown independent of each other to facilitate ease of discussion.

Valve 330 regulates the pressure of the gas provided from air source 328 as the gas is delivered downstream to turbine 350. As the gas reaches valve 332, valve 332 directs a portion of the regulated air to path 336 and the balance of the regulated air to path 338. The gas in path 338 is routed to electrical machine 360 and then routed to thermal storage unit 340, which heats the gas. The gas in path 336 bypasses thermal storage unit 340, but is recombined with heated gas exiting thermal storage unit 340 before being supplied to turbine 350. This combined gas then drives turbine 350, which in turn drives electrical machine 360 to produce electrical power.

The particular valve (e.g., valves 330 and 332) and gas routing configuration (e.g., paths 336 and 338) shown in FIG. 3 employs a dual gas path routing system to achieve a greater degree of control over the inlet temperature and pressure of the gas being supplied to turbine 350. Examples of such dual path routing systems are described in more detail in co-pending, commonly assigned U.S. patent application No. 10/943,294, filed September 17, 2004 and co-pending, commonly assigned U.S. patent application No. 10/943,328, filed September 17, 2004 both of which are hereby incorporated by reference in their entireties. If desired, the present invention can be implemented in a single path gas routing system for routing gas to a turbine. In such an system, bypass path 336 may be omitted.

During an emergency mode of operation, valve 330 regulates the expansion of the compressed gas being supplied by air reservoir 328 to a predetermined pressure. This creates a HIGH-to-LOW pressure drop, resulting in a Joule-Thompson expansion of gas that results in a substantial drop in the gas temperature.

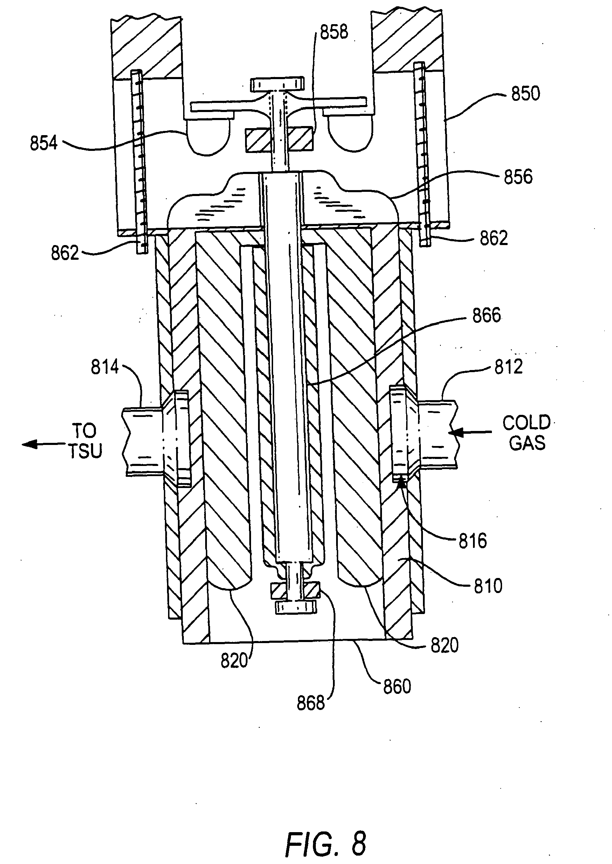

After the gas expands, the cool gas is routed to electrical machine 360. More particularly, the cool gas may be routed to a stator housing (not shown), such as those shown in FIGS. 8-14, to remove heat being produced during the generation of electric power. The stator housing permits cool gas to be directly applied to, or routed proximal to, the stator of electrical machine 360. A stator may include the stationary portions of the electrical machine, including a stator core, stator core laminations, and stator windings.

As the cold air passes through the stator housing, heat generated by electrical machine 360 during operation may be absorbed by the cool gas. Thus, the stator housing functions as a heat exchanger and the cool gas functions as the heat exchanging medium. After the cool gas absorbs heat from electrical machine 390, the partially heated gas may be routed to thermal storage unit 340.

An advantage of routing the partially heated gas to thermal storage unit 340 is that it increases the heating discharge efficiency of thermal storage unit 340. Thus, thermal storage unit 340 may not have to impart as much heat energy into the gas being supplied to turbine 350 to discharge the gas at a predetermined temperature. Moreover, recovering the heat losses of electrical machine 360 in the gas being supplied to thermal storage unit 340 may enable thermal storage unit 340 to be sized smaller and/or operate at a lower temperature.

The cooling methodology according to the principles of the invention can prevent other heat sources from adversely affecting the operating temperature of electrical machine 360. For example, the cooling of the stator can extract heat from bearings housed within electrical machine 360. Such bearings may include a non thrust-end bearing, a thrust-end bearing, or both. An added benefit of cooling bearings is that it prolongs their operational life. Stator cooling may extract heat from the rotor of electrical machine 360. Other sources of heat removed by the cool gas include resistance losses, eddy current losses, and hysteresis losses.

Another example of heat being removed from electrical machine 360 may include heat that is imparted to electrical machine 360 by turbine 350. In some applications, turbine 350 may be directly coupled to electrical machine 360. Thus, the heat of the inlet gas being supplied to drive turbine 350 may be transferred to electrical generator by way of conduction or convection, or a combination thereof.

Removing heat from electrical machine 360 according to the principles of the invention may result in a lower operating temperature than that achieved with conventional air, water, or oil cooled machines that reject heat to ambient conditions. This lower operating temperature allows current and flux density of the stator to be driven higher than the current and flux density that can be achieved at higher temperatures. This results in a greater current and flux carrying capacity for a given volume of the stator, resulting in a reduction in the volume of stator material (e.g., iron and copper) needed to construct a generator.

A similar advantage is realized for use of magnetic materials such as a rotor. With magnetic materials, the lower operating temperature results in increased flux density for a given volume of magnetic material. Thus, the volume of the magnetic material can be reduced, yet still provide the same electrical carrying capacity. The reduction in the volume of stator and magnetic materials reduces generator manufacturing costs and promotes increased generator design flexibility.

A further benefit of the reduction of rotor materials is that the polar moment of inertia is decreased. This may result in faster turbine-generation spool up time, thereby decreasing a time lag in providing backup power in the event of a power failure. Moreover, by bringing the turbine up to speed faster, less power may need to be drawn from a transient power source (e.g., flywheel backup energy system) during the transition period between utility power failure and the time it takes for the turbine generator to get up to speed and supply backup power.

It will be appreciated that the cooling methodology being used in accordance with this invention can use regenerative heating, which may result in a more efficiently operating and cost effective backup power supply system. Regenerative heating may be realized by redirecting heat picked up from electrical generator 360 (while being driven by turbine 350) to thermal storage unit 340. Thus, the same gas that cools, yet ultimately drives the generator may be used to improve the operating efficiency of thermal storage unit 340 and turbine 350.

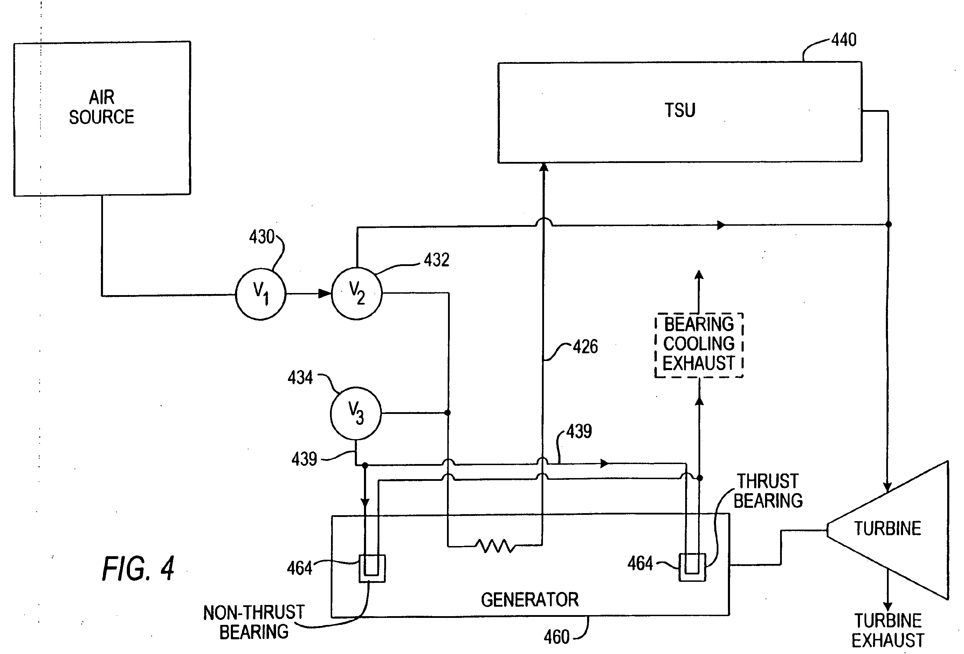

FIG. 4 shows a backup energy system 400 employing cooling according to the principles of the present invention to separately cool bearings that are housed within the electrical machine. The bearings may support a shaft load in a high-speed turbine-generator arrangement, and thus may be prone to overheating. If desired, bushing may be used in place of the bearings. Backup energy system 400 is similar to system 300 of FIG. 3 except that valve 434 may be coupled downstream from valve 432 to route cool gas directly to bearings 464 via path 439. One of bearings 464 may be a thrust end bearing and the other may be non-thrust end bearing. As shown, valve 434 is connected downstream from valve 432 and routes cool gas at a predetermined pressure to path 439. Path 439 may be connected to two air-tight chambers (not shown), which each house a bearing 464, that permits the cool gas to extract heat from bearings 464. The heat extracted from bearings 464 may be vented to the ambient environment.

In an alternative arrangement, heat extracted from bearings 464 may be fed back into path 426 instead of being vented to atmosphere. However, such an arrangement may require path 439 to be connected directly downstream from valve 432, as opposed to being connected downstream from a valve such as valve 434 - that is, valve 434 is omitted. Moreover, this alternative arrangement permits heat extracted from the stator jacket to be combined with heat extracted from bearings 464 prior to being routed to thermal storage unit 440. As discussed above, recovering this heat energy may improve the heating efficiency of thermal storage unit 440, thus permitting increased flexibility in sizing the thermal storage unit and adjusting the operating temperature of the thermal storage unit.

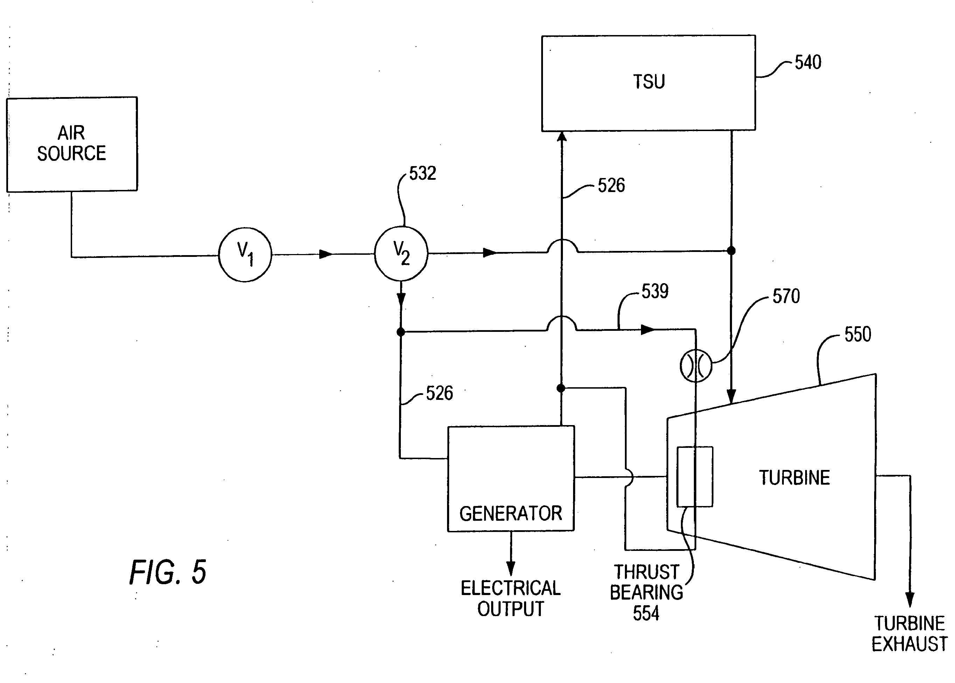

FIG. 5 shows a backup energy system 500 employing cooling according to the principles of the present invention to separately cool a bearing that is housed within turbine 550. Backup energy system 500 is similar to system 400 of FIG. 4, except that cool gas is routed to bearing 554 (e.g., a thrust end bearing) housed within turbine 550. As shown path 539 routes cool gas received downstream of valve 532 to a bearing chamber (not shown), where heat is extracted from end bearing 554 and routed to thermal storage unit 540 via path 526. Flow restriction device 570 may be used to limit the quantity of cool gas delivered to the bearing.

Alternatively, instead of re-directing heat extracted from bearing 554 back to thermal storage unit 540, the extracted heat may be exhausted to the ambient environment. In such an arrangement, it may be necessary to add an additional valve in path 539 to step down the pressure of the cool gas supplied by valve 532 to prevent excessive loss of compressed gas.

An advantage of cooling bearings in accordance with the invention, coupled with the fact that backup power systems 300, 400, and 500 spend a majority of their operational lives in a standby mode of operation, is that low cost bearings such as grease lubricated bearings can be used. The cool gas may sufficiently cool such bearings when the backup power system is in an active mode of operation, thereby obviating the need to use conventional cooling techniques such as oil cooling.

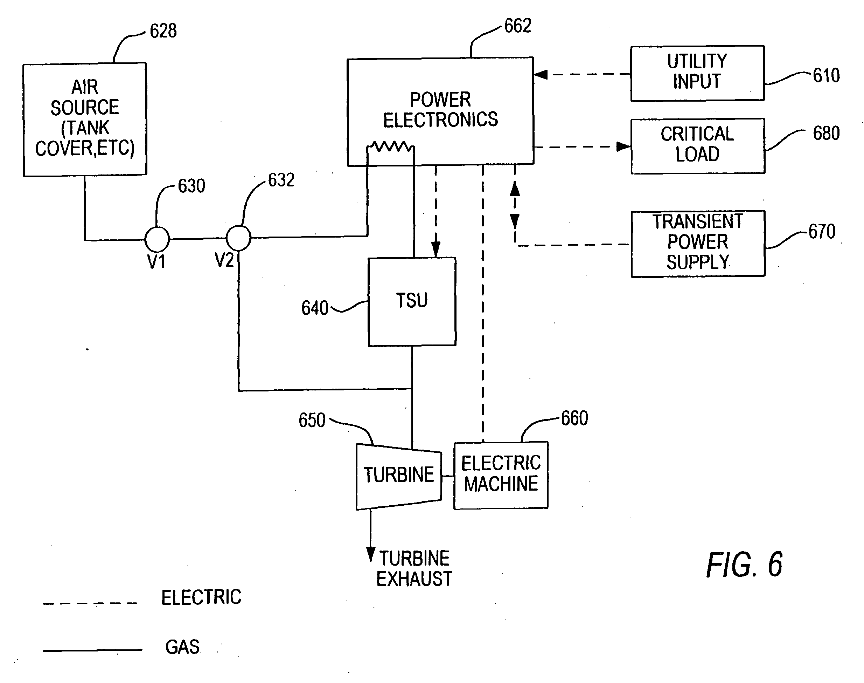

FIG. 6 shows a backup energy system 600 employing cooling according to the principles of the present invention to cool power electronics 662. Backup energy system 600 may include utility power 610 (e.g., an AC or DC power source), air source 628, valves 630 and 632, thermal storage unit 640, turbine 650, electrical machine 660, power electronics 662, transient power supply 670 (e.g., flywheel energy system), and load 680. Other components, such as a motor and compressor for charging air source 628 are not shown to avoid overcrowding the figure. In addition, paths for routing cool gas to electrical machine 660 and bearings are not shown to avoid overcrowding the figure, though it is understood that such paths may be provided in backup energy system 600.

Power electronics 662 may continuously operate regardless of whether backup energy system 600 is operating in a standby mode, transient mode, or active mode. Therefore, power electronic 662 may continuously emit heat regardless of the mode of operation. Power electronics 662 may include rectification electronics (e.g., AC to DC converters), inverting electronics (e.g., DC to AC converters), capacitors, inductors, control circuitry, and other components known to those skilled in the art.

During a standby mode, power electronics 662 may power thermal storage unit 640 and transient power supply 670. Thermal storage unit 640 may be powered so that it is heated to a predetermined temperature suitable for heating gas passing therethrough during an active mode of operation and to overcome heat losses such as, for example, losses due to the environment. Transient power supply 670 may be powered so that it can instantaneously supply power to load 680 when utility power 610 fails.

Power electronics 662 may condition power supplied to load 680 by transient power supply 660 during a transient mode of operation. Power electronics 662 may also condition power supplied to load 680 from electrical machine 660 during an active mode operation. It is during the transient and active modes of operation that power electronics 662 emits the most heat. This heat is removed using cooling in accordance with the principles of the invention.

When backup energy system 600 emerges from a standby mode of operation, compressed gas from air source 628 is expanded across valve 630, the expansion of which cools the gas, and is directed to power electronics 662. More particularly, valve 632 may direct cool gas to a power electronics housing (not shown) to remove heat generated by power electronics 662. After the gas exits the power electronics housing, it may be directed to thermal storage unit 640 before being routed to turbine 650. The heat picked up from power electronics 622 "pre-heats" the gas before it is supplied to thermal storage unit 640, increasing its discharge efficiency.

During standby mode, power electronics 662 generates heat, but generally not as much heat that is generated during the transient and active modes of operation. Because heat losses are less, a natural convection heat sink (not shown) may function as the primary cooling mechanism during standby mode.

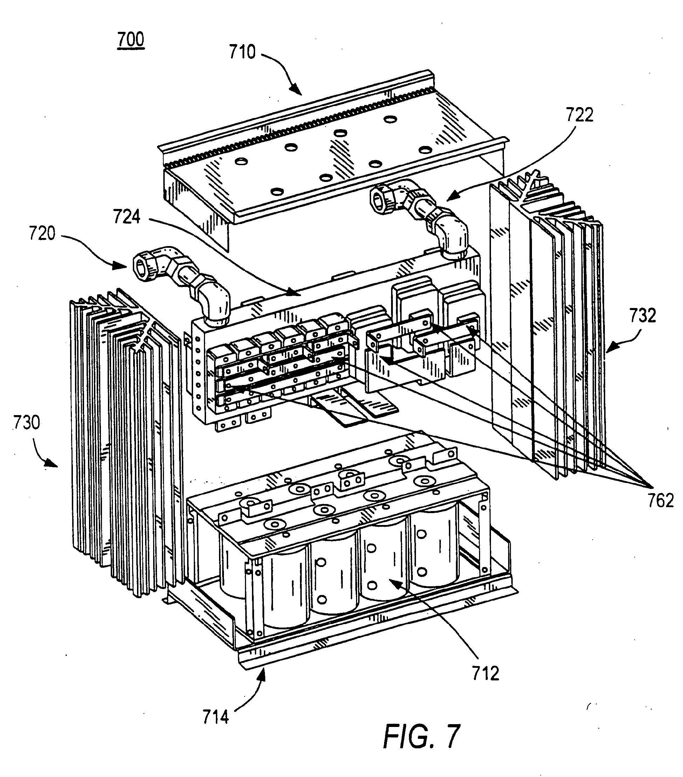

FIG. 7 shows a three-dimensional exploded view of a power electronics housing 700 in accordance with the principles of the present invention. Power electronics 762 may be mounted on gas-cooled heat sink 724, which includes air inlet 720 and air outlet 722. Heat sink 724 may be made using materials such as, for example, aluminum, copper, gold, iron, steel, and alloys thereof, or any other material with suitable thermal conductivity properties. During the transient and active modes, cool gas is routed to heat sink 724, entering at air inlet 720 and exiting at air outlet 722. Heat sink 724 may have channels (not shown) for routing the cool gas within the heat sink to maximize surface area of gas exposure to heat sink 724, yielding greater heat exchanging capacity.

Mounting brackets 710 and 714 may secure natural convection heat sinks 730 and 732 adjacent to gas-cooled heat sink 724 and to capacitors 712. Natural convection heat sinks 730 and 732 can assist gas-cooled heat sink 724 in removing heat generated by power electronics 762 during transient and active modes of operation. Also, during standby, modes of operation, natural convection heat sinks 730 and 732 may remove heat generated by power electronics 762. Air currents that are naturally present due to the differences in temperature at different heights of the system may enable heat sinks 730 and 732 to remove heat from power electronics 762. Natural convection heat sinks 730 and 732 may be made from materials such as, for example, plastic, aluminum, copper, gold, iron, steel, any alloys thereof, or any other material with suitable thermal conductivity properties.

Removing heat from power electronics 762 according to the principles of the present invention results in a greater cooling capacity than that achieved with conventional air, water, or oil cooled techniques. One benefit derived from the increased cooling capacity may be that the operating temperature of power electronics can be decreased to temperature levels lower than that achieved with conventional cooling techniques. For example, in one embodiment, the operating temperature of the power electronics may be maintained below or near ambient temperatures.

Another benefit is that increased levels of power density can be sustained for a long period of time without risk of overheating power electronics 762. This may enable the power electronics to operate in a "saturated" power density mode. A "saturated" power density mode may be an operating condition in which cooling according to the present invention permits the power density of the power electronics to be increased to levels above and beyond that which can be sustained by conventional cooling systems (e.g., forced air, water, or oil cooling). That is, if such increased levels of power density are demanded of power electronics being cooled with conventional cooling systems, the power electronics may cease to function, or if it can sustain operation, such operation may be momentary (e.g., a few seconds).

The power electronics may operate in a normal power density mode when lower levels of power density are required. Examples of normal power density mode include standby modes of operation and modes in which conventional cooling techniques, if such techniques were to be used, may sufficiently cool the power electronics.

FIG. 8 shows a cross-sectional view of a generator-turbine assembly having a stator housing 810 enclosing stator 820 in accordance with the principles of the present invention. Stator 820 may sometimes be referred to herein as a wound stator core, which may include the stator core, stator laminations, and stator windings. As shown, electrical machine 860 may be mounted to turbine 850 via mounting screw 862. Thrust end bearing 858 and non-thrust end bearing 858 may support turbine-generator rotor 866. During operation, heated compressed air is provided to air plenum 854 to drive turbine fan 856. The spinning of turbine 856 causes rotor 866 to rotate, the rotation of which creates a magnetic field that induces flux in stator 820. Time varying flux in wound stator core 820 generates voltage in the stator windings that causes current to flow in the windings when connected to an electrical load. The time varying flux generates heat due to eddy currents and hysteresis in the laminated core. Furthermore, currents in the windings generate heat due to resistive losses. Core and winding losses are removed by cool gas passing through stator housing 810.

Cool gas derived in accordance with this invention is supplied to inlet 812, which is connected to an annular channel 816 that permits the cool gas to flow proximal to and around the stator to outlet 814. Annular channel 816 may be a ring of predetermined depth and width that is built into stator housing 810. Further note that gas may split as it enters inlet 812, with a portion of gas passing through a first half of annular channel 816 and the remaining half passing through a second half of annular channel 816. As the cool gas passes through annular channel 816, it may absorb heat from stator 820 and other components associated with electrical machine 860.

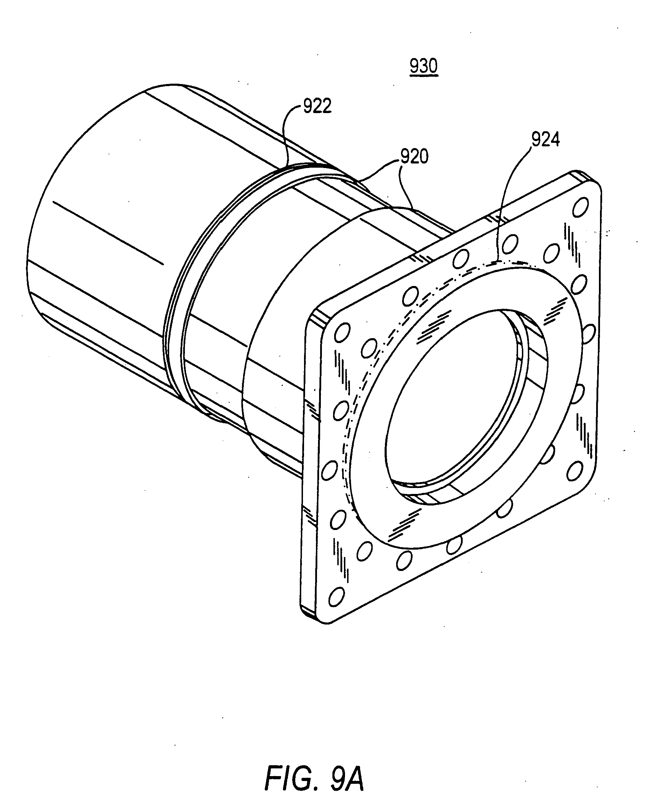

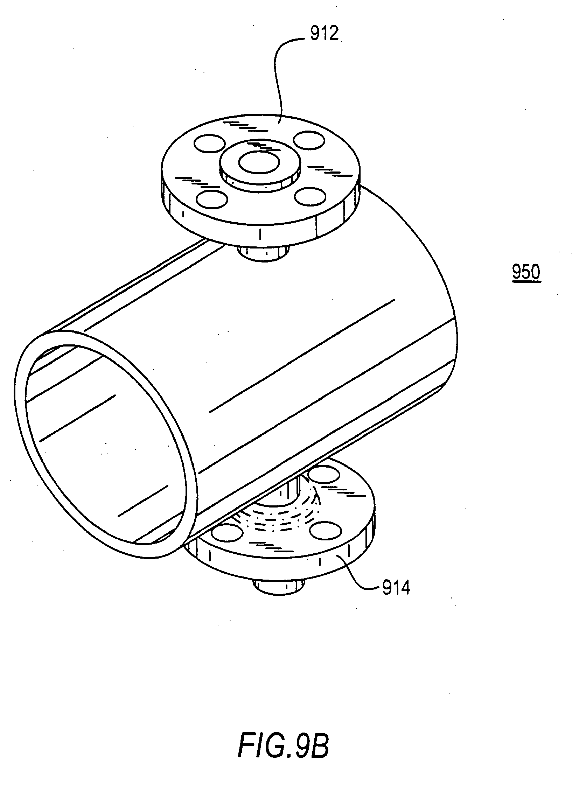

FIGS. 9A and 9B show three-dimensional views of a stator jacket 930 and a jacket housing 950 that slips over stator jacket 930 to form the stator housing shown in FIG. 8 in accordance with the principles of the present invention. FIG. 9A shows jacket 930 that fits over the wound stator core of the electrical machine. Depending on the size of the inner diameter, stator jacket 930 may fit flush against the stator core to maximize the heat exchange efficiency of stator housing 810. Stator jacket 930 has a channel 920, which has a diameter less than the outer diameter of stator jacket 930 and a predetermined width. Channel 920 forms annular channel 816 (shown in FIG. 8) when stator jacket housing 950 of FIG. 9B is positioned in place over stator jacket 930. O-ring channels 922 and 924 may be provided in stator jacket 930 to support, for example, an o-ring that provides a sealed fit when jacket housing 950 is slid in place over stator jacket 930. With such an airtight fit, gas may be forced to flow through annular channel 816 from inlet port 912 to outlet port 914.

The stator housing shown in FIGS. 9A and 9B may protect the wound stator core from potential problems that can result from operating with high-pressure gas. In this arrangement, high pressure gas may not be directly applied to the stator core because stator jacket 910 prevents gas from coming into direct contact with the stator laminations. Such protection may be necessary in high-pressure applications to maintain the structural integrity of the wound stator core. As is known in the art, stator cores are laminated and wound together. Thus, there may be small air pockets or channels existing between laminations that could allow air to pass through. If sufficient air pressure is applied, these channels or air pockets can expand, resulting in excess leakage and possible damage to the laminated core and/or windings, thereby adversely affecting the operating characteristics of the electrical machine.

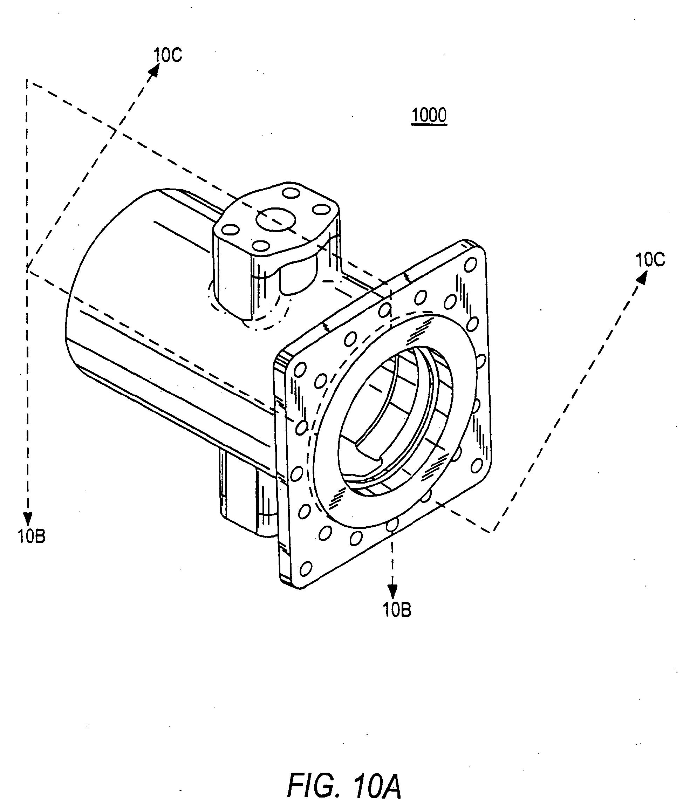

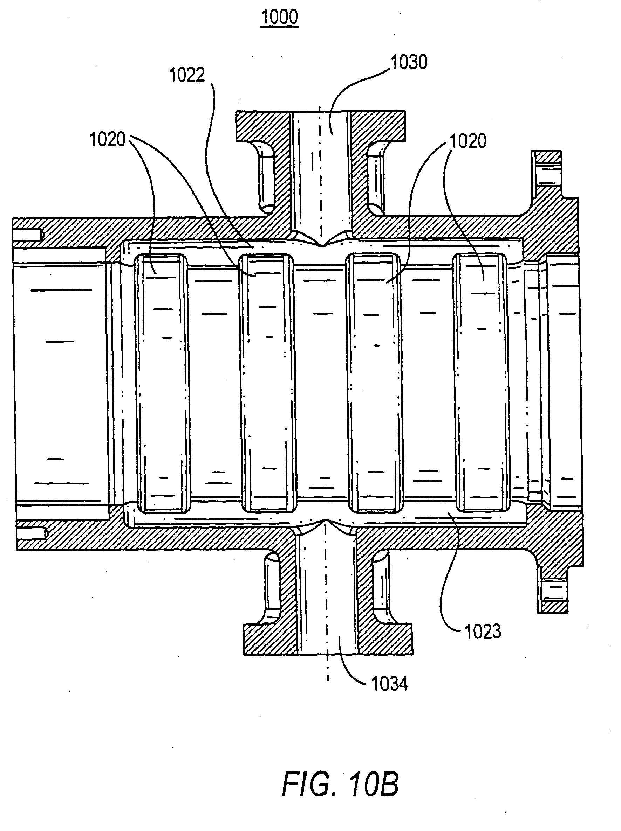

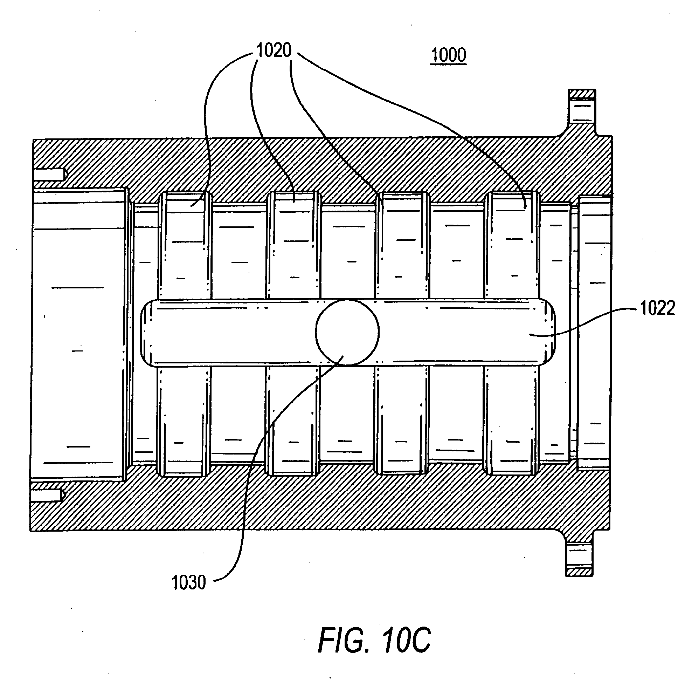

FIG. 10A-C shows several views of another stator housing 1000 that is in accordance with the principles of the present invention. Stator housing 1000 may be a single piece construction that may be cast and/or machined. FIG. 10A shows a three-dimensional view of stator housing 1000. FIG. 10B shows a cross-sectional view of stator housing 1000 taken along line B-B of FIG. 10A and FIG. 10C shows a cross-sectional view of stator housing 1000 taken along line C-C of FIG. 10A. Stator housing 1000 may have multiple annular channels 1020 for routing gas proximal to the stator core. Axial manifolds 1022 and 1023 connect annular channels 1020 to the input and output ports 1030 and 1034, respectively. Thus, by way of example, gas entering inlet 1030 may pass through manifold 1022, through annular channel 1020, through manifold 1023, and then out of outlet 1034.

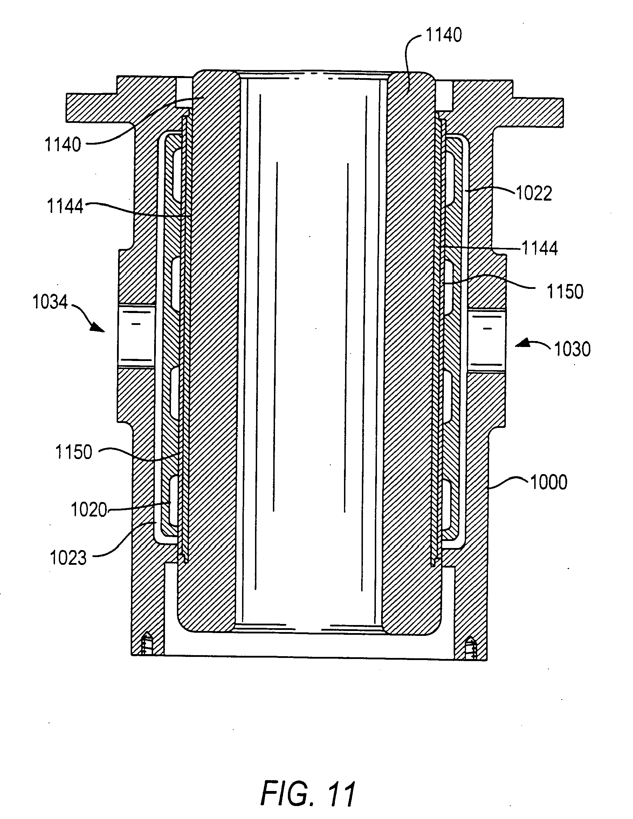

FIG. 11 shows a cross-sectional view similar to FIG. 10B except it shows stator housing 1000 with stator winding 1140, laminated stator core stack 1144, and pressure sleeve 1150 contained within housing 1000 in accordance with the principles of the present invention. Pressure sleeve 1150 may be constructed to fit flush against the outer diameter of laminated stator core 1144, and functions to protect laminations 1144 and stator winding 1140 from high pressure gas being supplied to stator housing 1000. As discussed above, it may be necessary to provide protection against high pressures so that the high pressure gas does not leak through the laminations. Thus, the combination of pressure sleeve 1150 and housing 1000, with stator winding 1140 and laminated stator core 1144 may provide an airtight assembly. If desired, o-rings (not shown) may be provided to further enhance the pressure integrity of the assembly.

Persons skilled in the art will appreciate that the illustrations shown in FIGS. 8-11 are not limiting and that different configurations can be employed to route cool gas to the electrical machine to draw heat away from the electrical machine. For example, the annular channel may have spiral ribbing to induce a spiral movement of gas through the stator housing. The inlet and outlet ports may be positioned differently than that shown in FIGS. 8-11. For example, the inlet and outlet may be placed at opposite ends of the housing (e.g., inlet is placed near the thrust-end bearing side and the inlet is placed near the non thrust-end bearing side of the turbine-generator combination).

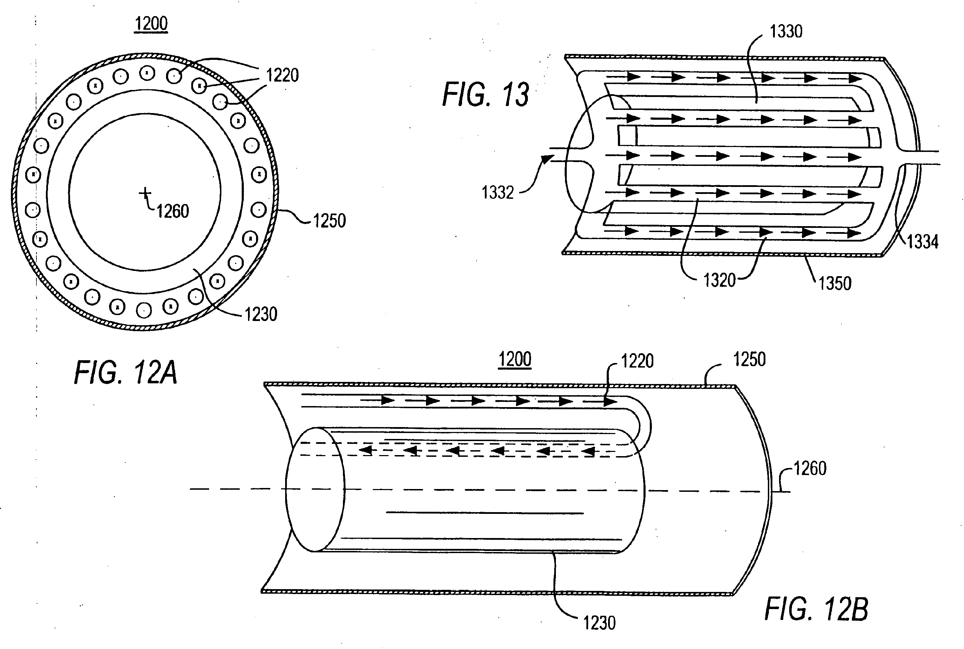

FIGS. 12, 13, and 14 show simplified cross-sectional views of other embodiments of stator housing in accordance with the principals of the present invention. FIGS. 12A and 12B show two different views of a stator housing 1200 having tubes or pipes 1220 soldered or brazed onto grooves (not shown) of stator jacket 1230. Several pipes 1220 may be soldered or brazed circumferentially about stator jacket 1230. An optional jacket housing 1250 may be constructed to slide over pipes 1220. In this embodiment, tube or pipe 1220 may extend parallel to the central axis 1260 of stator housing 1200 for a predetermined distance, beginning at a first end of housing 1200. At the end of the predetermined distance, tube 1220 returns to the first end of housing 1200. This send and return path routing structure is apparent in FIG. 12A, where "x" indicates that gas flows into tubes 1220 and "•" indicates that gas flows out of tubes 1220. This send and return routing structure is also apparent in FIG. 12B, where the arrows indicate the flow of gas from a first end to the opposite end and back to the first end of stator housing 1200.

FIG. 13 shows a tube or piping structure for routing gas that is similar to that shown in FIGS. 12A and 12B, but the gas may be directed to flow from a first end of the stator housing to the opposite end of stator housing 1300 in accordance with the principles of the present invention. FIG. 13 shows that pipes 1320 are disposed circumferentially about the central axis (not shown) of stator jacket 1330. A first end of pipes 1320 is connected to an inlet manifold 1332 and a second but opposite end of pipe 1320 is connected to an outlet manifold 1334. As shown, this configuration routes gas from a first end to an opposite end of stator housing 1300. If desired, an optional jacket housing 1350 may be constructed to slide over pipes 1320.

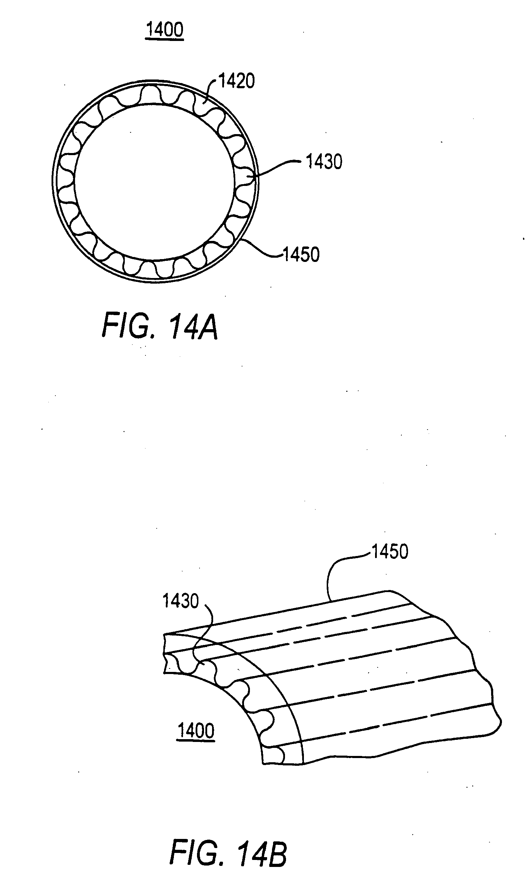

FIGS. 14A and 14B show yet another variation of a stator housing according to the principles of the present invention. Stator housing 1400 has axial flow channels 1420 that extend parallel to the central axis of stator housing 1400. Axial flow channels 1420 are built into stator jacket 1430. That is, stator jacket 1430, itself, may be cast or machined to have groves that form axial flow channels 1420 when jacket housing sleeve 1450 is slid over stator jacket 1430. The inner diameter of housing sleeve 1450 is such that it fits flush against or proximate to the outer diameter of stator jacket 1430. O-rings may be used in to increase pressure capacity.

Manifolds (not shown) may be coupled to one or both ends of stator jacket 1410, depending on how gas is being routed through axial flow channels 1420. For example, only one manifold may be used if gas is being routed in and out of the same end. Persons skilled in the art will appreciate that if the single manifold arrangement is used, a return path for re-routing the gas back to the manifold is needed. Two manifolds, positioned on opposite ends, may be used if gas is routed from a first end to a second end of stator jacket 1410.

Persons skilled in the art will appreciate that other arrangements of piping, tubing, and.integral cast tubing (FIG. 14) may be utilized. For example, the arrangements may have the tubing wind around the stator jacket, as opposed to running lengthwise along the stator jacket. Such tubing may take on irregular, non-conventional forms that include patterns and/or random distribution of tubing.

Thus it is seen that the same compressed gas being used to drive a turbine can also be used to cool components and/or subsystems of an electrical generation system. A person skilled in the art will appreciate that the present invention can be practiced by other than the described embodiments, which are presented for purposes of illustration rather than of limitation, and the present invention is limited only by the claims which follow.

## Claims

1. A method for cooling components and/or subsystems of an electrical generation system, comprising:
providing a source of compressed gas;
decompressing said compressed gas, the decompression of which causes the temperature of said compressed gas to drop to a predetermined temperature; and
cooling at least one component and/or subsystem with said decompressed gas.

2. The method defined in claim 1, further comprising:
regulating said decompressing such that said compressed gas is decompressed to a predetermined pressure.

3. The method defined in claim 1 or 2, further comprising:
using said compressed gas to generate electrical power.

4. The method defined in claim 1, 2 or 3, further comprising:
maintaining the temperature of said at least one component and/or subsystem at a predetermined temperature with said decompressed gas.

5. The method defined in claim 1, 2, 3 or 4, wherein said cooling comprises routing said decompressed gas to, or proximal to, an electrical machine.

6. The method defined in any one of claims 1 to 5, wherein said cooling comprises routing said decompressed gas to, or proximal to, at least one bearing that supports a rotor of a turbine-generator.

7. The method defined in any one of claims 1 to 6, wherein said cooling comprises routing said decompressed gas to, or proximal to; power electronics.

8. The method defined in any one of claims 1 to 7, further comprising:
routing said decompressed gas from said at least one component and/or subsystem to at least one other component and/or subsystem.

9. The method defined in any one of claims 1 to 8, further comprising:
distributing heat retained by said decompressed gas while cooling said at least one component and/or subsystem to another component and/or subsystem.

10. A system for cooling components and/or subsystems of an electrical generation system, comprising:
a source of compressed gas;
a valve coupled to said source of compressed gas and operative to control the decompression of said compressed gas, the decompression of which causes the temperature of said compressed gas to drop to a predetermined temperature; and
at least one component and/or subsystem connected downstream of said valve and is cooled by said decompressed gas.

11. The system defined in claim 10, wherein said valve is a pressure regulator.

12. The system defined in claim 10 or 11, wherein said at least one component and/or subsystem comprises an electrical machine.

13. The system defined in claim 10, 11 or 12, wherein said at least one component and/or subsystem comprises at least one bearing.

14. The system defined in claim 10, 11, 12 or 13, wherein said at least one component and/or subsystem comprises power electronics.

15. The system defined in any one of claims 10 to 14, further comprising:
a housing that receives said decompressed gas, said housing constructed to route said decompressed gas to, or proximal to, said at least one component and/or subsystem.

16. The system defined in any one of claims 10 to 15, further comprising:
a turbine-generator connected to receive decompressed gas used to cool said at least one component and/or subsystem, said turbine-generator being driven by said decompressed gas to generate power.

17. The system defined in claim 16, wherein said turbine generator if further connected to receive said decompressed gas substantially directly from said valve.

18. The system defined in claim 16 or 17, further comprising:
a thermal storage unit connected to receive decompressed gas used to cool said at least one component and/or system, said thermal storage unit heats said decompressed gas to a predetermined temperature, and said thermal storage unit is connected to provide said heated decompressed gas to said turbine-generator.

19. A method for cooling equipment in a backup energy system, comprising:
providing a source of compressed gas;
selectively decompressing said compressed gas, the decompression of which causes the temperature of said compressed gas to drop to a predetermined temperature; and
routing said decompressed gas to, or proximal to, an electrical machine to remove heat from said electrical machine while said backup energy system is operating in an emergency mode of operation.

20. The method defined in claim 19 further
maintaining an operating temperature of said electrical machine at a desired operating temperature.

21. The method defined in claim 19 or 20, wherein said desired operating temperature is a sub-ambient temperature.

22. The method defined in claim 19, 20 or 21, further comprising:
driving a turbine with said selectively decompressed gas; and
powering said electrical machine when said turbine is being driven.

23. The method defined in claim 19, 20, 21 or 22, further comprising:
routing a first portion of said decompressed gas to a turbine;
routing a second portion of said decompressed gas to, or proximal to, said electrical machine; and
re-routing said second portion to said turbine after said second portion has been routed to said electrical machine.

24. The method defined in claim 23, wherein said re-routing comprises heating said second portion prior to providing said re-routed second portion to said turbine.

25. The method defined in claim 24, wherein said heating comprises recovering heat from said electrical machine.

26. The method defined in claim 25, wherein said heating is performed by an exhaustless heater.

27. The method according to claim 23, 24, 25 or 26, further comprising:
routing a third portion of said decompressed gas directly to at least one bearing.

28. A method for providing backup power to a critical load in the event of a disturbance in the supply of power from a primary power source, comprising:
providing a compressed gas;
driving a turbine with said compressed gas;
powering an electrical machine with said turbine to provide backup power; and
cooling at least said electrical machine with said compressed gas.

29. The method defined in claim 28, wherein said cooling comprises:
decompressing said compressed gas to provide a cool gas; and
routing said cool gas to, or proximal to, said electrical machine.

30. The method defined in claim 29, wherein said routing comprises;
providing said cool gas to a stator housing of said electrical machine.

31. The method defined in claim 29 or 30, wherein said routing comprises:
providing said cool gas to a bearing that supports a shaft being driven by said turbine.

32. The method defined in claim 28, 29, 30 or 31, wherein said cooling comprises maintaining said electrical machine at a desired operating temperature.

33. A method for maintaining a desired operating temperature of an electrical generator being driven by a turbine in an electrical generation system, comprising:
providing a compressed gas;
regulating the expansion of said compressed gas, the expansion of which causes said compressed gas to cool;
routing said cool gas to a stator housing of said electrical generator; and
removing heat from said electrical generator as said cool gas passes through said stator housing.

34. The method defined in claim 33 further comprising:
driving a turbine with said compressed gas; and
powering said electrical machine with said turbine to provide power.

35. A backup energy system, comprising:
a source of compressed gas;
a valve connected to said source and operative to decompress said compressed gas, the decompression of which causes the temperature of said compressed gas to drop to a predetermined temperature; and
a path connected to said valve that routes said decompressed gas to, or proximal to, an electrical machine to remove heat from said electrical machine while said backup energy system is operating in an emergency mode of operation.

36. The system defined in claim 35, further comprising:
a turbine connected to the portion of said path exiting said electrical machine, said turbine powers said electrical machine as said decompressed gas being routed through said path drives the turbine blades of said turbine.

37. The system defined in claim 36, wherein said path is a first path and said turbine comprises at least one bearing for supporting a shaft, said system further comprising:
a second path connected to said valve that routes said decompressed gas to, or proximal to, said at least one bearing.

38. The system defined in claim 35, 36 or 37, further comprising:
an exhaustless heater connected to the portion of said path exiting said electrical machine, said heater heats said decompressed gas to a predetermined temperature; and
a turbine connected to the output of said exhaustless heater, said turbine powers said electrical machine as said heated decompressed gas drives the turbine blades of said turbine.

39. The system defined in claim 38, wherein said exhaustless heater is a thermal storage unit.

40. The system defined in any one of claims 35 to 39, further comprising:
a stator housing connected to said path and to said electrical machine, said stator housing enables said decompressed gas to absorb heat generated by said electrical machine.

41. The system defined in any one of claims 35 to 40, wherein said path is a first path and said electrical machine comprises at least one bearing for supporting a shaft, said system further comprising:
a second path connected to said valve and routes said decompressed gas to, or proximal to, said at least one bearing to remove heat from said at least one bearing while said backup energy system is operating in an emergency mode of operation.

42. The system defined in any one of claims 35 to 41, wherein said path is a first path, said first path routes said decompressed gas to said electrical machine, a thermal storage unit, and to a turbine.

43. The system defined in claim 42, further comprising a second path connected to said valve that routes said decompressed gas to said turbine.

44. The system defined in any one of claims 35 to 43, wherein said predetermined temperature is a temperature lower than the temperature of said compressed gas stored in said air source.

45. The system defined in any one of claims 35 to 44, wherein said compressed gas is compressed air.

46. The system defined in any one of claims 35 to 45, wherein said valve is a pressure regulator.

47. A system for maintaining a desired operating temperature of an electrical generator being driven by a turbine in a compressed air storage system, comprising:
a source of compressed gas;
a valve that regulates the expansion of said compressed gas, the expansion of which causes said compressed gas to cool; and
a stator housing mounted to said electrical machine and connected to receive said cool gas from said valve, said stator housing constructed to enable said cool gas to remove heat from said electrical generator as said cool gas passes through said stator housing.

48. The system defined in claim 47, further comprising:
an exhaustless heater connected to receive said cool gas exiting said stator housing, said heater heats said cool gas to a predetermined temperature, wherein said turbine is connected to receive said heated gas from said heater.

49. The system defined in claim 47 or 48, further comprising:
at least one bearing housing connected to receive said cool gas from said valve, said at least one bearing housing constructed to enable said cool gas to remove heat generated by a bearing housed within said bearing housing.

50. The system defined in claim 48 or 49, wherein said at least one bearing housing is coupled to, or within, said electrical machine.

51. The system defined in claim 48,49 or 50, wherein said at least one bearing housing is coupled to, or within, said turbine.

52. The system defined in claim 48, 49, 50 or 51, wherein said gas exiting said at least one bearing housing is combined with said gas exiting said stator housing.

53. The system defined in any one of claims 48 to 52, wherein said valve is a first valve, said system further comprising:
a second valve connected to said first valve and operative to reduce the pressure of said cool gas provided to said at least one bearing housing, and
wherein said gas exiting said at least one bearing is vented to atmosphere.

54. The system defined in any one of claims 47 to 53, further comprising control circuitry operative to control the operation of said valve.

55. A stator housing, comprising:
a stator jacket having an inner diameter, an outer diameter, and an annular groove of a predetermined width and depth; and
a stator jacket sleeve having an inlet port and an outlet port and constructed to slide over said stator jacket to provide an airtight seal over said annular groove such that when said sleeve is slid in position over said jacket, an annular channel is formed to permit a fluid to flow from said inlet port through said annular channel to said outlet port.

56. The housing defined in claim 55, wherein said stator jacket sleeve has an inner diameter that is greater than said outer diameter of said stator jacket but only to an extent that yields said airtight seal.

57. The housing defined in claim 55 or 56, wherein said stator jacket comprises a plurality of o-ring grooves.

58. The housing defined in claim 57 further comprising an o-ring positioned in each of said plurality of o-ring grooves.

59. The housing defined in claim 55, 56, 57 or 58, wherein said inner diameter of said jacket is such that said jacket slides over the stator of an electrical machine.

60. A stator housing, comprising:
an inlet port;
an outlet port;
at least one annular channel that is connected to said inlet and outlet ports to permit flow of fluid from said inlet port through said at least one annular channel to said outlet port; and
a pressure sleeve that is fixed to an inner diameter of said housing to provide pressure containment of fluid flowing through said at least one annular channel.

61. The housing defined in claim 60, wherein said at least one annular channel comprises at least two annular channels, said housing further comprising:
a first axial flow channel connected to said input port and to said at least two annular channels; and
a second axial flow channel connected to said output port and to said at least two annular channels.

62. The housing defined in claim 60 or 61, wherein said stator housing is cast.

63. The housing defined in claim 60, 61 or 62, wherein said stator housing is machined.

64. An electrical generator assembly, comprising:
a generator comprising a stator having an outer diameter; and
a stator housing having an inner diameter that enables said housing to fit flush against the outer diameter of said stator, said stator housing comprising:
an inlet port;
an outlet port;
at least one annular channel connected to said inlet and outlet ports to permit flow of fluid from said inlet port through said at least one annular channel to said outlet port; and
a pressure sleeve that forms said inner diameter of said housing and provides pressure containment of fluid flowing in said at least one annular channel.

65. The assembly defined in claim 64,
wherein said pressure sleeve fits flush against said outer diameter of said stator.

66. The assembly defined in claim 64 or 65,
wherein said stator fits flush against said pressure sleeve.
